Europäisches Patentamt

European Patent Office

Office européen des brevets

(19)

(11) Veröffentlichungsnummer: **0 029 240**
**A2**

(12) # EUROPÄISCHE PATENTANMELDUNG

(21) Anmeldenummer: 80107110.1

(22) Anmeldetag: 17.11.80

(51) Int. Cl.³: **A 01 K 13/00**

(30) Priorität: 20.11.79 DE 2946764

(43) Veröffentlichungstag der Anmeldung: **27.05.81**
**Patentblatt 81/21**

(84) Benannte Vertragsstaaten: **AT BE CH FR GB IT LI LU NL SE**

(71) Anmelder: **Hamann, Jörn, Aschauweg 18, D-2300 Kiel (DE)**

(72) Erfinder: **Hamann, Jörn, Aschauweg 18, D-2300 Kiel (DE)**

(74) Vertreter: **Heldt, Gert, Dr. Dipl.-Ing., Neuer Wall 57, D-2000 Hamburg 36 (DE)**

(54) Vorrichtung zum Desinfizieren von Zitzen.

(57) Vor dem Melken werden die Zitzen von Kühen gereinigt und desinfiziert, um zu verhindern, dass Krankheitserreger in die Milch gelangen. Ausserdem können sich die Zitzen untereinander dadurch gegenseitig infizieren, dass die Milch einer kranken Zitze über die Milchwege einer Melkmaschine an eine gesunde Zitze gelangt. Zur Desinfektion der Zitzen (37) wird eine Lösung unter Druck auf die Oberfläche der Zitze (37) gespritzt. Zu diesem Zwecke ist die Zitze (37) von einem Rohrsystem (8) umgeben, in dem in Richtung auf die Zitze (37) ausgerichtete Ausströmöffnungen vorgesehen sind. Das Rohrsystem (8) kann aus mindestens einem über die Zitze (37) schiebbaren Rohrring (29) bestehen, dessen Innendurchmesser dem Aussendurchmesser einer Zitze (37) entspricht und der mit mindestens einer Zuleitung für das unter Druck setzbare Lösungsmittel versehen ist.

## Vorrichtung zum Desinfizieren von Zitzen

Die Erfindung betrifft eine Vorrichtung zum Besprühen von Zitzen eines Euters mit Hilfe einer verspritzbaren Lösung, die in Richtung auf die Zitzen gespritzt wird.

Beim Melken von Kühen vorzugsweise mit Melkmaschinen sind gewisse Vorbehandlungen des Euters erforderlich, wie beispielsweise die Reinigung und Desinfizierung der Zitzen, um zu verhindern, daß von dort Krankheitserreger in die Milch bzw. durch den Milchstrom in die Zitze gelangen.

Zur Durchführung derartiger Vorbehandlungen sind schon unterschiedliche Anlagen und Vorrichtungen bekanntgeworden. Bei Großbetrieben werden die Kühe durch Euterwaschanlagen geführt, bei denen durch Spritzdüsenanordnungen die Behandlungsflüssigkeiten von unten und den Seiten dem gesamten Euterbereich zugeführt werden. Derartige Anlagen sind aber wegen des mit dem Großflächensprühen auf den gesamten Euterbereich verbundenen erheblichen Einsatzes an Reinigungs- und Desinfektionsflüssigkeit nur bei Großbetrieben rentabel. Es wurde deshalb auch schon vorgeschlagen, die Flüssigkeiten über Reinigungsbecher, die wie Melkbecher über die Zitzen gestülpt werden, aufzubringen. Dabei läßt sich zwar der Einsatz an Flüssigkeit wegen der gezielten Aufbringung verringern. Da aber mehrere Zitzen in dieselbe Desinfektionslösung eingetaucht werden, besteht die Gefahr, daß diese sich gegen-

0029240

seitig infizieren. Soweit bei Anlagen dieser Art die Aufsprühung nur zentral von unten auf die Zitzenkuppe erfolgt, werden die Zitzen nicht ausreichend gereinigt und desinfiziert. Um einer etwaigen Milchkonsumentengefährdung durch Desinfektionsmittelrückstände aus dem Besprühvorgang vorzubeugen, resultieren Tendenzen, Sprühmittel mit geringem Desinfektionsmittelanteil primär zur Pflege und solche mit höherem Desinfektionsmittelanteil einzusetzen, deren Auftragung im Euterbereich entsprechend ihrer Bestimmung vor und nach dem Melkvorgang erfolgt.

Wenn dieser Tendenz mit den bekannten Anlagen Rechnung getragen werden soll, dann entweder nur unter Inkaufnahme einer weiteren beträchtlichen Steigerung des Flüssigkeitsverbrauchs oder einer ungenügenden Reinigung bzw. Pflege der gefährdeten Euterbereiche.

Aufgabe der vorliegenden Erfindung ist es daher, eine Vorrichtung der genannten Art dahingehend zu verbessern, daß mit ihr mit einfachen Mitteln und geringem Arbeitsaufwand eine schnelle, umfassende, lösungsmittelsparende Reinigung der Zitzen erfolgt, bei der das Lösungsmittel vor und nach dem Melken jeweils nur für eine Zitze benutzt wird. Die Aufgabe wird erfindungsgemäß dadurch gelöst, daß jede einzelne Zitze von einem unter Druck setzbares Lösungsmittel enthaltenden Rohrsystem umgeben ist, in dem in Richtung auf die Zitze ausgerichtete Ausströmöffnungen vorgesehen sind.

Die mit der Erfindung erzielten Vorteile liegen darin, daß die Zitze mit einem Sprühvorgang allseitig mit dem Lösungsmittel benetzt wird. Bei jedem Sprühvorgang wird auf die Zitze nur eine begrenzte aber für den jeweiligen Zweck ausreichende Menge des Lösungsmittels gesprüht, das dann im Anschluß durch entsprechend angebrachte Abflußmöglichkeiten sofort abfließen kann. Hierdurch wird verhindert, daß jede Zitze mit einer schon benutzten Flüssigkeit in Berührung kommt. Außerdem wird das Lösungsmittel sehr gut auf die gesamte Zitze verteilt. Insbesondere wird auch dafür Sorge getragen, daß das Desinfektionsmittel an die für das Infektionsrisiko gefährdesten Stellen der Zitze gelangt.

Gemäß einer bevorzugten Ausführungsform der Erfindung ist mindestens eine Ausströmöffnung auf die Zitzenkuppe gerichtet. Dadurch wird erreicht, daß der in der Zitzenkuppe mündende Milchkanal auf jeden Fall mit Lösungsmittel bespritzt wird. Dieser Milchkanal öffnet sich, wenn die Milch aus der Zitze fließt. Durch diese Öffnung können Mastitiserreger in den Milchkanal einmünden und entgegen dem Milchstrom im Milchkanal nach oben wandern. Sie gelangen dabei in die Milchzisterne und führen dort zu Erkrankungen der Zitze. Aus diesem Grunde stellt die Zitzenkuppe denjenigen Teil der Zitze dar, der nach dem Melkvorgang am sorgfältigsten von anhaftenden Milchtropfen gereinigt werden muß.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

Figur 1: eine teilweise aufgeschnittene Seitenansicht der erfindungsgemäßen Vorrichtung,

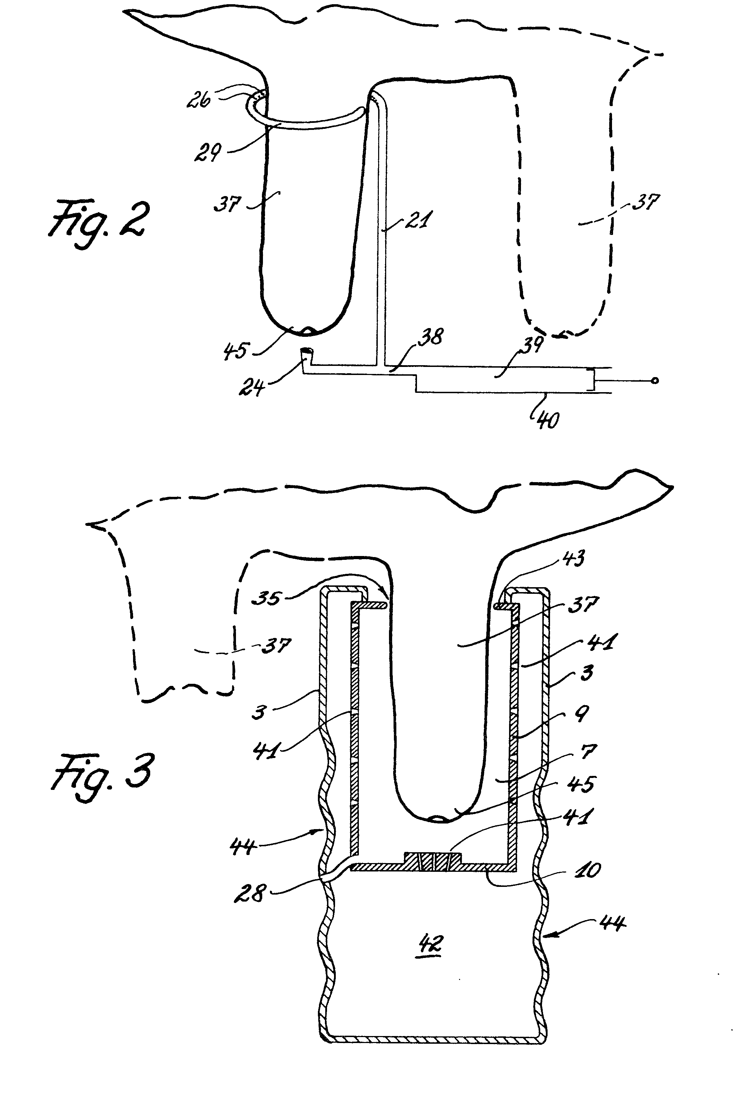

Figur 2: eine Seitenansicht einer Vorrichtung ohne Behälterumhüllung,

Figur 3: einen Längsschnitt durch einen Doppelbehälter,

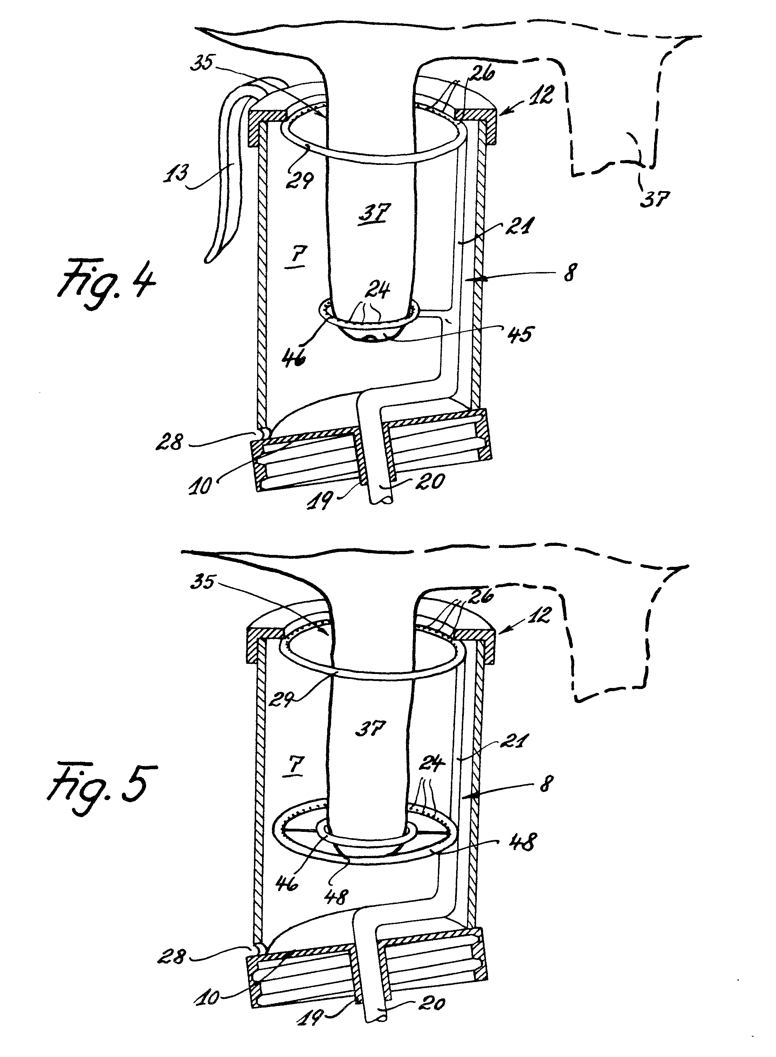

Figur 4: einen Längsschnitt durch einen Behälter
mit zwei Rohrringen,

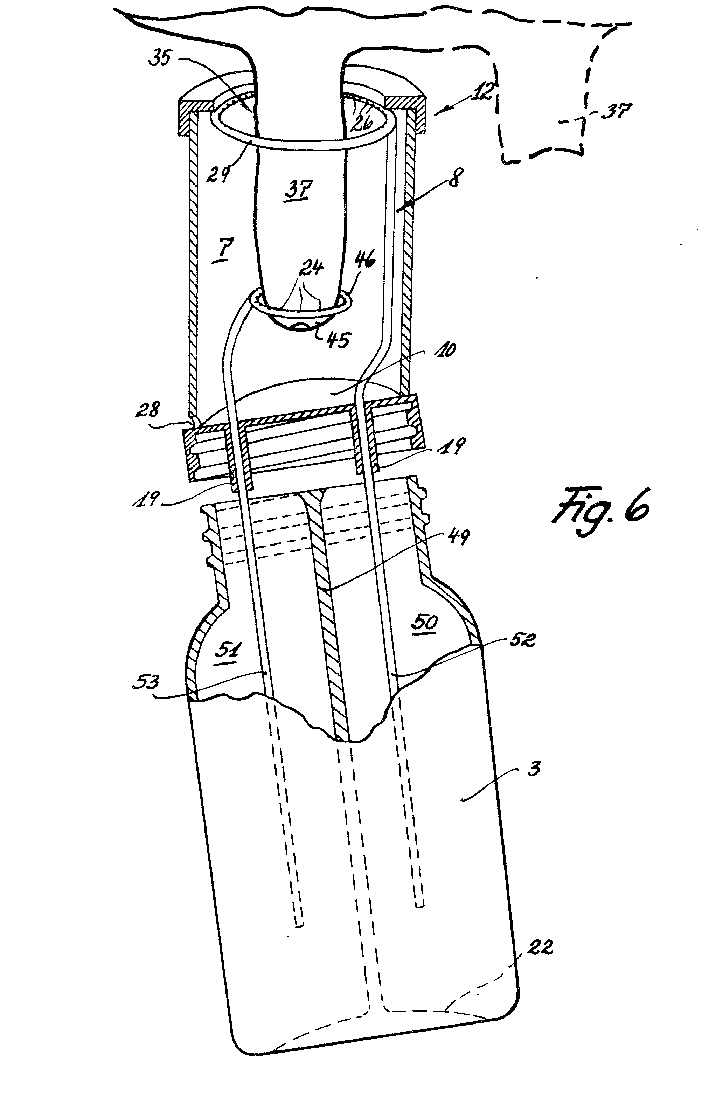

Figur 5: einen Längsschnitt durch einen Behälter
mit drei Rohrringen,

Figur 6: einen Längsschnitt durch die Vorrichtung mit getrennter Vorratshaltung.

Die Vorrichtung besteht im wesentlichen aus einer Sprühvorrichtung 8, die in einem Aufsatz 1 angebracht ist, der
mittels eines Verschlusses 2 mit einem Vorratsbehälter 3
lösbar verbunden ist. Der Behälter 3 besteht aus durchsichtigem und elastischem Material und hat im wesentlichen eine zylindrische Form. Auf seiner Außenwand ist eine
hervorspringende Maßskala 4 vorgesehen, deren Einteilung
bis in die Höhe des Verschlusses 2 verläuft. Der Verschluß
2 ist als Schraubverschluß ausgebildet, dessen Außengewinde 5 auf einem Hals 23 des Vorratsbehälters 3 und dessen
Innengewinde 6 auf einem entsprechend gestalteten unteren
Teil des Aufsatzes 1 ausgebildet sind.

Der Aufsatz 1 besteht aus einem becherartigen Behälter 7,
in dessen Innenraum die Sprüheinrichtung 8 angeordnet ist.
Der becherartige Behälter 7 ist in seiner Form so ausgebildet, daß sein Mantel 9 auf einem dem Vorratsbehälter 3
zugewandten Boden 10 unter einem bestimmten Neigungswinkel
steht. Unterhalb des Bodens 10 setzt sich der Behälter 7
in Form einer reifenartigen Verdickung fort, die als Rand
11 über den Boden 10 hinausragt und an dessen Innenwandung
das Innengewinde 6 ausgebildet ist.

An seiner dem Boden 10 gegenüberliegenden Einstecköffnung
35 ist der Behälter 3 mit einer Aufhängevorrichtung 47 versehen. Diese besteht aus einem Kranz 12, an dem ein Haken 13 ausgebildet ist. Der Kranz 12 besteht aus zwei senkrecht aufeinanderstehenden Kreisringen 14, 15, von denen der Kreisring 15 in der Ebene der Einstecköffnung 35 verläuft, und der mit diesem verbundene Kreisring 14 umgibt wulstartig die als Mantel 9 ausgebildete Becheraußenwandung. Mittels einer Nut 16 in Höhe der Einstecköffnung 35 am Mantel 9, in die ein Wulst 17 des ihn beaufschlagenden Kreisrings 14 hineinragt, ist der Kranz 12 auf der Einstecköffnung 35 des Behälters 7 verschieblich befestigt. Der in der Ebene der Einstecköffnung 35 verlaufende Kreisring 15 ragt bei dieser Anordnung des Kranzes 12 mit einem Teil seiner Fläche so über die Einstecköffnung 35, daß hierdurch der Durchmesser der Einstecköffnung 35 des Behälters 7 verkleinert wird. Der Boden 10 ist im Innenraum des Behälters 7 in der Mitte mit einer Öffnung 18 versehen, die außerhalb des Behälters 7 durch eine auf dem Boden 10 senkrecht stehend angeordnete Hülse 19 gleichen Innendurchmessers weitergeführt wird.

Die Sprüheinrichtung 8 besteht aus einem sich in den Vorratsbehälter 3 erstreckenden Standrohr 20, an das sich im Behälter 7 eine sich an deren Innenwandung in Richtung auf die Einstecköffnung 35 erstreckende Leitung 21 kleineren Durchmessers anschließt. Sowohl das Standrohr 20 als auch die Leitung 21 sind an bestimmten Stellen mit Düsen 24, 26 versehen.

Das Standrohr 20 erstreckt sich durch die Hülse 19 und ragt mit seinem mit Düsen 24 versehenen Ende durch die Öffnung 18 des Bodens 10 in den Innenraum des Behälters 7 hinein. Mit seinem offenen Ende ragt es auf der entgegengesetzten Seite aus der Hülse 19 heraus und ist in seiner Länge so bemessen, daß es oberhalb eines den Vorratsbehälter 3 abschließenden Bodens 22 endet. Die Düsen 24 sind auf eine in den Behälter 7 hineinragende Zitze 37 ausgerichtet und in dem aus dem Boden 10 herausragenden Stutzen 36 des Standrohres 20 angeordnet. Dieser Stutzen 36 kann eine Anschrägung 27 aufweisen, die der Neigung des Mantels 9 gegenüber dem Boden 10 entspricht. In den Stutzen 36 mündet die Leitung 21, die in einer leichten Krümmung in Richtung der Innenwand des Mantels 9 verläuft, sich an ihm hochwendelt und in Form eines Ringes 29 parallel zum Kreisring 15 innerhalb seines Projektionsraumes verläuft und kurz vor Vollendung des Kreises durch einen Quetschverschluß 25 abgeschlossen wird. Die Düsen 26 sind in einem der in den Behälter 7 ragenden Zitze 37 zugewandten inneren Teil des Ringes 29 angebracht. Aufgrund der Anordnung der Düsen 24 auf dem angeschrägten Verschluß 27 des Stutzens 36 sowie im inneren Teil des Rohrringes 29 der Leitung 21 wird die Zitze 37 sowohl seitlich als auch an der Kuppe 45 bei jedem Sprühvorgang mit dem Lösungsmittel voll benetzt.

Im Mantel 9 des Behälters 7 sind in Höhe des Bodens 10 Ablauföffnungen 28 für das Lösungsmittel vorgesehen. Diese sind an der tiefsten Stelle des Behälters 7 angeordnet, damit die Flüssigkeit gut abfließen kann. Bei der Anbringung der Ablauföffnung 28 ist insbesondere die Schräglage des Behälters 7 beim üblichen Einsatz der erfindungsgemäßen Vorrichtung zu berücksichtigen. Die Anordnung der Düsen 24 auf dem Stutzen 36 haben den Sinn, diese aus der sich auf dem Boden 10 ansammelnden bereits benutzten Flüssigkeit herauszuhalten. Die Ablauföffnung muß daher unterhalb der Düsen 24 angeordnet sein, wenn der Behälter 7 in der üblichen Benutzungslage eingesetzt wird. Darüber hinaus können die Ablauföffnungen 28 mit einem Ablaufkanal 30 oder einer Abführungsleitung 31 versehen werden, so daß die herauslaufende Flüssigkeit ableitend geführt oder in einen Behälter 34 aufgefangen werden kann.

Zum Einsatz der Vorrichtung wird zunächst der Behälter 7 vom Vorratsbehälter 3 abgeschraubt. Sodann wird der Vorratsbehälter 3 mit für den jeweiligen Zweck vorgesehenem Lösungsmittel gefüllt. Dabei können Lösungen mit unterschiedlichen Desinfektionsmittelanteilen für die Verwendung vor und nach dem Melken Verwendung finden.

Dabei verhilft die Maßskala 4 in der Anwendung das für die Desinfektion bzw. Pflege günstigste Mischungsverhältnis im Vorratsbehälter 3 herzustellen.

Sodann wird der Behälter 7 wieder auf den Vorratsbehälter 3 aufgeschraubt. Dabei ist zu berücksichtigen, daß mit Hilfe des Gewindes 5, 6 eine so feste Verbindung zwischen dem Vorratsbehälter 3 und dem Behälter 7 herbeigeführt werden muß, daß im Bereich des Halses 23 eine druckdichte Verbindung zwischen den beiden miteinander zu verbindenden Teilen herbeigeführt wird. Diese Verbindung muß gegenüber dem beim Sprühen aufzubringenden Druck die notwendige Dichte aufweisen.

Sodann wird die Vorrichtung im Bereich des Vorratsbehälters 3 erfaßt und die Zitze 37 in die Einstecköffnung 35 des Behälters 7 eingeführt. Dabei bietet es sich an, die Vorrichtung so zu halten, daß sich die Mittelachse des Behälters 7 senkrecht in Richtung der in sie einzuführenden Zitze 37 verläuft, während aufgrund des zwischen dem Behälter 7 und dem Vorratsbehälter 3 vorhandenen Neigungswinkel der Vorratsbehälter 3 sich in Richtung auf die die Vorrichtung bedienende Bedienungsperson erstreckt.

Nachdem die Zitze 37 möglichst weit in den Behälter 7 eingeführt worden ist, wird das entsprechende Lösungsmittel durch die Düsen 26, 24 auf sie verteilt. Dabei wird die ausströmende Menge des Lösungsmittels in der Weise dosiert, daß das aus den Düsen 26 austretende Lösungsmittel an den Außenwandungen der Zitze 37 herabströmt und diese auf einer für das Melken wichtigen Länge benetzt. Die aus den Düsen 24 austretende Flüssigkeit trifft unmittelbar auf die Zitzenküppe 45. Das Aussprühen der Flüssigkeit wird dadurch erreicht, daß der flexible Vorratsbehälter 3 von der ihn umfassenden Hand so beansprucht wird, daß sich sein Volumen verkleinert. Der über der Flüssigkeit entstehende Luftdruck reicht aus, um das Lösungsmittel mit der zum Besprühen der Zitze 37 notwendigen Geschwindigkeit aus den Düsen 24, 26 austreten zu lassen.

Nach Beendigung desSprühvorganges sammelt sich überschüssige Flüssigkeit auf dem Boden 10 des Behälters 7. Es tritt aus der Ablauföffnung 28 aus und verteilt sich auf dem Stallboden. Sollte der Verdacht bestehen, daß eine Zitze 37 bereits infiziert ist, sollte möglichst verhindert werden, daß das benutzte Desinfektionsmittel auf den Stallboden fließt, wo es dazu führen könnte, daß von ihm weitere Infektionen ausgehen.

Nachdem alle vier Zitzen einzeln auf diese Weise behandelt worden sind, wird die gesamte Vorrichtung am Haken 13 so aufgehängt, daß eine Verschmutzung und Infizierung möglichst weitgehend vermieden wird. Bei einer Reinigung der Vorrichtung kann der Kranz 12 vom Mantel 9 abgezogen werden, damit eine sorgfältige Reinigung sämtlicher Ecken ermöglicht wird.

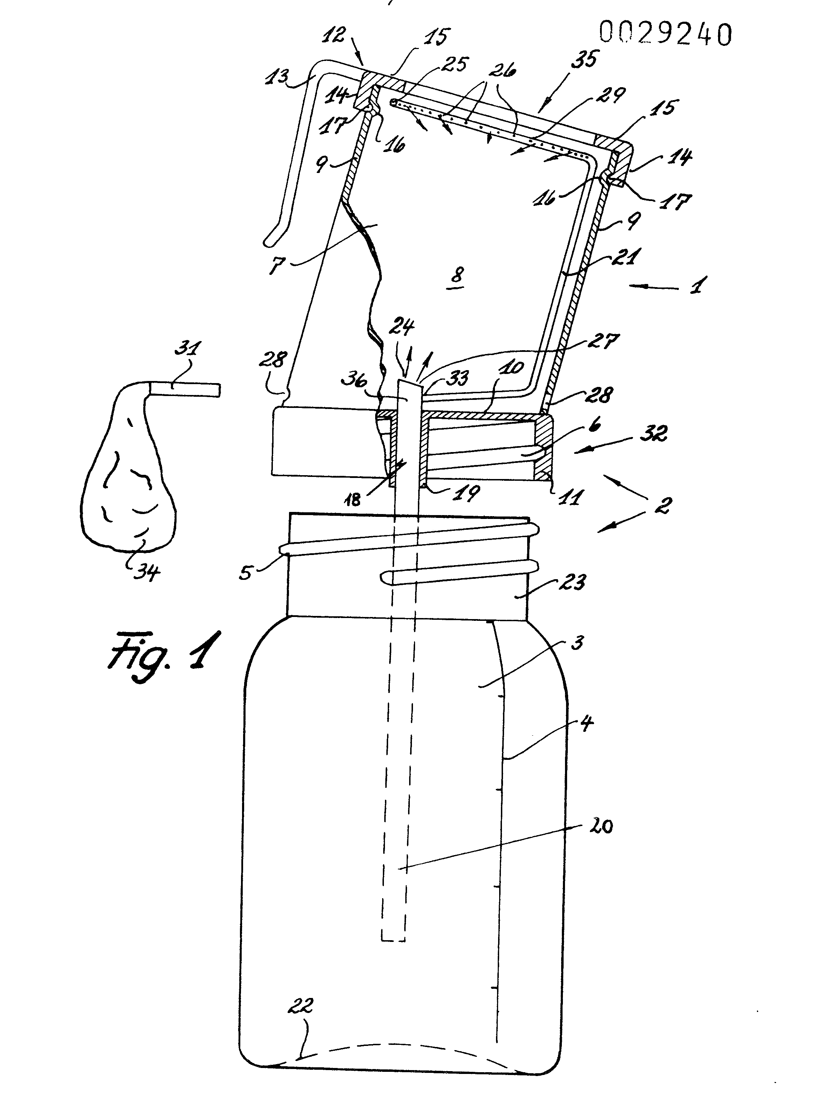

Es ist auch möglich, die Vorrichtung ohne den Vorratsbehälter 3 und den Behälter 7 auszuführen. In diesem Falle wird die Zitze 37 lediglich durch einen am Ende einer Leitung 21 angebrachten Ring 29 hindurchgeführt. Außerdem sind an dem dem Ring 29 gegenüberliegenden Ende der Leitung 21 die Düsen 24 angeordnet, die das Lösungsmittel unmittelbar auf die Zitzenkuppe 45 versprühen. In die Leitung 21 mündet der Druckstutzen 38 einer Handpumpe 39, deren Druckzylinder 40 gleichzeitig als Griff zur Handhabung der gesamten Vorrichtung dient. Es ist auch möglich, ohne die Handpumpe 39 die Leitung 21 unmittelbar an ein Druckversorgungssystem anzuschließen, das lediglich durch ein handbetätigtes Ventil unter Druck gesetzt werden kann. Diese Vorrichtung ist zwar billiger als die der Figur 1. Sie wird im Regelfall für die Behandlung der Zitze 37 sicherlich ausreichen. Dabei muß allerdings auf den Rücksprüheffekt verzichtet werden, der dadurch entsteht, daß die aus den Düsen 24, 26 austretende Flüssigkeit von den Wandungen des Behälters 7 in Richtung auf die Zitze 37 reflektiert wird.

Schließlich kann auch statt der Leitung 21 der Sprüheffekt dadurch erzeugt werden, daß Düsen 41 unmittelbar im Mantel 9 bzw. Boden 10 des Behälters 7 angeordnet sind. Dieser Behälter 7 ist mit einem flexiblen Vorratsbehälter 3 auf seiner gesamten Länge umschlossen. Darüber hinaus erstreckt sich der Vorratsbehälter 3 noch unterhalb des Bodens 10 im Vorratsteil 42 des Vorratsbehälters 3. Zum Befüllen des Vorratsbehälters 3 wird dieser vom oberen Abschluß 43 des Behälters 7 abgezogen. Nachdem die beiden Behälter 3, 7 wieder zu einer gemeinsamen Vorrichtung zusammengefügt worden sind, wird die Zitze 37 in die Einstecköffnung 35 des Behälters 7 eingeführt. Sodann wird auf den Inhalt des Vorratsbehälters 3 Druck ausgeübt, so daß die Flüssigkeit sich durch die Düsen 41 in Richtung auf die Zitze 37 ergießt. Sie sammelt sich am Boden 10 des inneren Behälters 7 und fließt über eine Ablauföffnung 28, die sich sowohl im inneren Behälter 7 als auch im äußeren Behälter 3 befindet, ab. Um die Handhabung des äußeren Behälters 3 zu erleichtern, sind auf seiner Oberfläche Griffrillen 44 angeordnet, in denen die Finger der die Vorrichtung haltenden Hand verlaufen.

Zweckmäßigerweise werden sämtliche Vorratsbehälter 3 aus durchscheinendem oder durchsichtigem Kunststoffmaterial hergestellt. Dieses läßt sich am günstigsten zusammendrükken, so daß die sich im Inneren des Behälters 3 befindende Flüssigkeit unter Druck gerät.

Andererseits kann der jeweilige Stand der Desinfektionsflüssigkeit von außen erkannt werden, so daß rechtzeitig für die Wiederauffüllung des Vorratsbehälters 3 Sorge getragen werden kann.

Im weiteren kann die Sprüheinrichtung 8 innerhalb des Behälters 7 in Form von zwei Rohrringen 29, 46 ausgebildet sein, wobei der Rohrring 46 dem Rohrring 29 gegenüberliegend in Höhe des Bodens 10 angeordnet ist. Er ist in seinem Durchmesser so ausgebildet, daß er eine hineinragende Zitze 37 im Bereich ihrer Kuppe 45 beaufschlagt. Außerdem weist er Düsen 24 auf, die unter anderem im 60$^{\circ}$-Winkel zur Ringebene ausgerichtet sind und auf den Schließmuskelbereich der Zitzen weisen. Dieser Rohrring 46 erfüllt gleichzeitig die Funktion eines Justierringes, der Berührungen der Zitzen 37 mit sich am Boden 10 angesammeltem abgeflossenen Desinfektionsmittel verhindert.

Eine weitere Ausbildung der Sprüheinrichtung 8 ist in der Form denkbar, daß dem Rohrring 29 in Gegenüberlage zwei Rohrringe 46, 48 angeordnet sind, die auf gleicher Höhe liegen. In dieser Anordnung sind die Rohrringe 29, 48 über das Standrohr 20 mit dem Vorratsbehälter 3 verbunden. Der Rohrring 46 wird in seiner Ausbildung als Justierring von dem Rohrring 48 in einem bestimmten Abstand umschlossen und ist an ihm befestigt. Die Rohrringe 29, 48 weisen Düsen 26, 24 verschiedener Ausrichtung auf, wobei im Rohrring 48 unter anderem Düsen 24 im 60$^{\circ}$-Winkel zur Ringebene ausgerichtet sind, die auf den Schließmuskelbereich der Zitze 37 weisen.

Eine Variationsgestaltung des Vorratsbehälters 3 besteht darin, daß sich auf dem Boden 22 senkrecht stehend eine Trennwand 49 über die gesamte Höhe des Vorratsbehälters 3 erstreckt und ihn in zwei Teilbehälter 50, 51 teilt.

Hierbei ist ein Teilbehälter für die Vorratshaltung einer Lösung mit überwiegendem Desinfektionsmittelanteil und der andere für eine Vorratshaltung einer Lösung mit überwiegendem Hautpflegemittelanteil vorgesehen. Die Sprüheinrichtung 8 für einen derart ausgestalteten Vorratsbehälter 3 besteht aus zwei Rohrringen 29, 46, die jeweils über getrennte Versorgungsleitungen 52, 53 mit dem Teilbehälter 50, 51 in Verbindung stehen. In dieser Anordnung ist das Versprühen von Desinfektionsmittel vor und nach dem Melkvorgang über den in Höhe des Bodens 10 angeordneten Rohrring 46 vorgesehen, wobei nach dem Melkvorgang der letzte Milchtropfen desinfizierend beseitigt wird. Darüber hinaus wird Hautpflegemittel enthaltendes Lösungsmittel mittels des Rohrringes 29 versprüht, der in Höhe der Einstecköffnung 35 angeordnet ist.

- 12 -

0029240

Patentansprüche:

1. Vorrichtung zum Besprühen von Zitzen eines Euters mit Hilfe einer verspritzbaren Lösung, die in Richtung auf die Zitzen gespritzt wird, dadurch gekennzeichnet, daß jede einzelne Zitze (37) von einem unter Druck setzbaren Lösung enthaltenden Rohrsystem (8) umgeben ist, in dem in Richtung auf die Zitze (37) ausgerichtete Ausströmöffnungen vorgesehen sind.

2. Vorrichtung nach Anspruch 1, dadurch gekennzeichnet, daß eine Lösung mit überwiegendem Desinfektionsmittelanteil vorgesehen ist.

3. Vorrichtung nach Anspruch 1 und 2, dadurch gekennzeichnet, daß eine Lösung mit überwiegendem Hautpflegemittelanteil vorgesehen ist.

4. Vorrichtung nach Anspruch 1 bis 3, dadurch gekennzeichnet, daß mindestens eine Ausströmöffnung auf die Zitzenkuppe (45) gerichtet ist.

5. Vorrichtung nach Anspruch 1 bis 4, dadurch gekennzeichnet, daß das Rohrsystem (8) aus mindestens einem über die Zitze (37) schiebbaren Rohrring (29) besteht, dessen Innendurchmesser dem Außendurchmesser einer Zitze (37) entspricht und der mit mindestens einer Zuleitung für das unter Druck setzbare Lösungsmittel versehen ist.

6. Vorrichtung nach Anspruch 1 bis 5, dadurch gekennzeichnet, daß das Rohrsystem (8) wendelförmig die gesamte Zitze (37) umschließt.

7. Vorrichtung nach Anspruch 1 bis 3, dadurch gekennzeichnet, daß ein zur Aufnahme einer Zitze geeigneter Behälter (7) in seinen Behälterwandungen in Richtung auf die Zitze (37) gerichtete Ausströmöffnungen aufweist, die über ein Versorgungssystem mit einem das Lösungsmittel enthaltenden Vorratsbehälter (3) verbunden sind, und der Behälter (3) für das Lösungsmittel mindestens eine Ablauföffnung (28) aufweist.

8. Vorrichtung nach Anspruch 7, dadurch gekennzeichnet, daß der Behälter (7) eine zum Einstecken der Zitze (37) in den Behälterinnenraum vorgesehene Einstecköffnung (35) aufweist, die von einem Ring von Ausströmöffnungen umgeben ist.

9. Vorrichtung nach Anspruch 7 und 8, dadurch gekennzeichnet, daß der Innenraum des Behälters (7) eine die kürzeste Zitze (37) aufnehmende Länge aufweist.

10. Vorrichtung nach Anspruch 7 bis 9, dadurch gekennzeichnet, daß der Behälter (7) von einem das Lösungsmittel enthaltenden Vorratsbehälter (3) ringförmig umgeben ist und der Inhalt des Vorratsbehälters (3) unter Druck setzbar ist.

11. Vorrichtung nach Anspruch 7 bis 10, dadurch gekennzeichnet, daß die Wandungen des Vorratsbehälters (3) flexibel sind und zur Erzeugung eines sich auf das Desinfektionsmittel mitteilenden Druckes zusammendrückbar sind.

12. Vorrichtung nach Anspruch 7 bis 10, dadurch gekennzeichnet, daß die Wandungen des Vorratsbehälters (3) starr sind und im Vorratsbehälter (3) eine Druck erhöhende Handpumpe (39) vorgesehen ist.

13. Vorrichtung nach Anspruch 7, dadurch gekennzeichnet, daß im Behälter (7) ein Rohrsystem (8) angeordnet ist, das die Zitze (37) umgibt.

14. Vorrichtung nach Anspruch 13, dadurch gekennzeichnet, daß das Rohrsystem (8) in Form mindestens eines Rohrringes (29) ausgebildet ist, der eine zum Einstecken der Zitze (37) vorgesehene Einstecköffnung (35) umgibt.

15. Vorrichtung nach Anspruch 13 und 14, dadurch gekennzeichnet, daß der Behälter (7) einen der Einstecköffnung (35) gegenüber angeordneten Boden (10) aufweist, aus dem ein Stutzen (36) herausragt, auf dem in Richtung auf die Zitzenkuppe (45) ausgerichtete Düsen (24) angeordnet sind.

16. Vorrichtung nach Anspruch 13 bis 15, dadurch gekennzeichnet, daß die Düsen (24) des Stutzens (36) und der Rohrring (29) über ein Standrohr (20) und eine Leitung (21) mit einem Vorratsbehälter (3) verbunden sind.

17. Vorrichtung nach Anspruch 13 bis 16, dadurch gekennzeichnet, daß der Vorratsbehälter (3) unterhalb des Bodens (10) angeordnet ist und mit dem Behälter (7) lösbar verbunden ist.

18. Vorrichtung nach Anspruch 1 bis 17, dadurch gekennzeichnet, daß der Behälter (7) eine Mittelachse aufweist, die gegenüber derjenigen des Vorratsbehälters (3) leicht geneigt ist.

19. Vorrichtung nach Anspruch 13 bis 18, dadurch gekennzeichnet, daß zwischen dem Behälter (7) und dem Vorratsbehälter (3) eine druckdichte Verbindung vorgesehen ist.

20. Vorrichtung nach Anspruch 13 bis 19, dadurch gekennzeichnet, daß der Behälter (7) mit dem Vorratsbehälter (3) verschraubbar ist.

21. Vorrichtung nach Anspruch 13 bis 20, dadurch gekennzeichnet, daß der Vorratsbehälter (3) flexible Wandungen aufweist, die zum Zweck der Ausübung eines Druckes auf das Desinfektionsmittel verformbar sind.

22. Vorrichtung nach Anspruch 13 bis 21, dadurch gekennzeichnet, daß der Behälter (7) eine Sammelstelle für benutztes Desinfektionsmittel aufweist, die mit einer Ablauföffnung (28) versehen ist.

23. Vorrichtung nach Anspruch 22, dadurch gekennzeichnet, daß die Ablauföffnung (28) mit Auffangbehältern (34) verbunden sind.

24. Vorrichtung nach Anspruch 13 bis 23, dadurch gekennzeichnet, daß der Boden (10) des Behälters (7) als Verschluß für die Einfüllöffnung des Vorratsbehälters (3) ausgebildet ist.

25. Vorrichtung nach Anspruch 13 bis 24, dadurch gekennzeichnet, daß das Standrohr (20) durch den Boden (10) hindurchgeführt ist und als Stutzen (36) einerseits in die Düsen (24) und andererseits über eine Leitung (21) in den Rohrring (29), in dem Düsen (26) angeordnet sind, einmündet.

26. Vorrichtung nach Anspruch 13 bis 25, dadurch gekennzeichnet, daß die Düsen (24) auf dem Stutzen (36) oberhalb des Bodens (10) angeordnet sind.

27. Vorrichtung nach Anspruch 13 bis 26, dadurch gekennzeichnet, daß am Behälter (7) eine Aufhängevorrichtung (47) angebracht ist.

28. Vorrichtung nach Anspruch 13 bis 27, dadurch gekennzeichnet, daß auf dem Vorratsbehälter (3) eine Meßskala (4) abgebildet ist und der Vorratsbehälter (3) aus durchscheinendem Material besteht.

29. Vorrichtung nach Anspruch 13, dadurch gekennzeichnet, daß das Rohrsystem (8) in Form mindestens zweier Rohrringe (29, 46) ausgebildet ist, von denen der Rohrring (29) die zum Einstecken der Zitze (37) vorgesehene Einsteköffnung (35) umgibt und der Rohrring (46) dem Rohrring (29) gegenüberliegend in Höhe des Bodens (10) angeordnet ist.

30. Vorrichtung nach Anspruch 13 und 29, dadurch gekennzeichnet, daß der Rohrring (46) als ein Justierring ausgebildet ist, der mindestens einen die Zitze (37) im Bereich ihrer Kuppe (45) beaufschlagenden Durchmesser aufweist.

31. Vorrichtung nach Anspruch 30, dadurch gekennzeichnet, daß die Rohrringe (29, 46) Düsen (24, 26) unterschiedlicher Ausrichtung aufweisen.

32. Vorrichtung nach Anspruch 30 und 31, dadurch gekennzeichnet, daß der als Justierring ausgebildete Rohrring (46) Düsen (24) aufweist, die im 60$^{\circ}$-Winkel zur Ringebene ausgerichtet sind und auf den Schließmuskelbereich der Zitze (37) zeigen.

33. Vorrichtung nach Anspruch 30 bis 32, dadurch gekennzeichnet, daß die Rohrringe (29, 46) über eine Leitung (21) und ein Standrohr (20) mit dem Versorgungsbehälter (3) verbunden sind.

34. Vorrichtung nach Anspruch 13, dadurch gekennzeichnet, daß das Rohrsystem (8) in Form mindestens dreier Rohrringe (29, 46, 48) ausgebildet ist, von denen der Rohrring (29) die zum Einstecken der Zitze (37) vorgesehene Einsteköffnung (35) umgibt und die Rohrringe (46, 48) dem Rohrring (29) gegenüberliegend in Höhe des Bodens (10) angeordnet sind.

35. Vorrichtung nach Anspruch 13 und 34, dadurch gekennzeichnet, daß der Rohrring (48) den als Justierring ausgebildeten Rohrring (46) in gleicher Höhe in einem bestimmten Abstand umschließt, wobei der als Justierring ausgebildete Rohrring (46) am Rohrring (48) befestigt ist.

36. Vorrichtung nach Anspruch 35, dadurch gekennzeichnet, daß die Rohrringe (29, 48) Düsen (26, 24) verschiedener Ausrichtung aufweisen, wobei im Rohrring (48) Düsen (24) im 60°-Winkel zur Ringebene ausgebildet sind und auf den Schließmuskelbereich der Zitze (37) zeigen.

37. Vorrichtung nach Anspruch 35 und 36, dadurch gekennzeichnet, daß die Rohrringe (29, 48) über eine Leitung (21) und ein Standrohr (20) mit dem Versorgungsbehälter (3) verbunden sind.

38. Vorrichtung nach Anspruch 10, dadurch gekennzeichnet, daß der Vorratsbehälter (3) eine sich über seine gesamte Höhe erstreckende Trennwand (49) aufweist, die auf dem Boden (22) senkrecht steht, und der Inhalt der zwei Teilbehälter (50, 51) unter Druck setzbar ist.

39. Vorrichtung nach Anspruch 10 und 38, dadurch gekennzeichnet, daß die Rohrringe (29, 46) über getrennte Versorgungsleitungen (54,55) mit den Teilbehältern (50, 51 ) in Verbindung stehen, wobei Lösungsmittel mit unterschiedlichen Desinfektionsmittelanteilen Verwendung finden.

0029240

*Fig. 1*

*Fig. 2*

*Fig. 3*

Fig.4

Fig.5

Fig. 6